# EUROPÄISCHE PATENTANMELDUNG

(11) **EP 1 033 555 A1**
(43) Veröffentlichungstag der Anmeldung: **06.09.2000**
(21) Anmeldenummer: 00103689.6
(22) Anmeldetag: 22.02.2000
(51) Int. Cl.: G01C 15/00

(54) **Bausatz aus Laserwasserwaage und Justiergerät**

(30) Priorität: 03.03.1999 DE 29903753 U
(71) Anmelder: RIWA TEC GmbH, Messgeräte Handelsgesellschaft, 76831 Birkweiler/Pfalz (DE)
(72) Erfinder: Blatt, Hans-Peter, 76833 Frankweiler (DE)
(74) Vertreter: Ratzel, Gerhard, Dr.

(57) **Zusammenfassung**

Die Erfindung betrifft einen Bausatz, bestehend aus einer Laserwasserwaage und einem mit dieser integrierbaren Justiergerät zur Justierung und Fixierung der Wasserwaage in allen Richtungen des Raums. Vorzugsweise ist die Wasserwaage eine Winkelwasserwaage

## Beschreibung

Die vorliegende Erfindung betrifft einen Bausatz bestehend aus einer Laserwasserwaage und einem dazugehörigen Justiergerät zur Seiten und Höheneinstellung in allen Richtungen des Raums.

Diese beiden Bausatz-Elemente können sowohl getrennt als auch insbesondere in Kombination miteinander gewerblich eingesetzt werden.

Laserwasserwaagen gehören bekanntlich an sich zum Stand der Technik und ermöglichen es, bestimmte gewünschte Zielpunkte oder Fluchtpunkte in der gedachten Verlängerung der in Funktion befindlichen Wasserwaage beispielsweise an Wänden, Böden und/oder Decken von Gebäuden festzulegen.

Infolge der optischen Empfindlichkeit von LaserWasserwaagen ist deren genaue Justierung d.h. die gewünschte Ausrichtung in allen Richtungen des Raums notwendig. Diese Justierung wird nach einem Vorschlag des Standes der Technik mit einem sogenannten Justierteller bewerkstelligt, der jedoch nicht alle Erfordernisse der Praxis in allen Fällen erfüllt.

Dieser Stand der Technik kann insbesondere mit dem Nachteil behaftet sein, daß man bisher nur in der Lage war, durch vertikale und/oder horizontale Verdrehung im 90°-Winkelunterschied zu justieren.

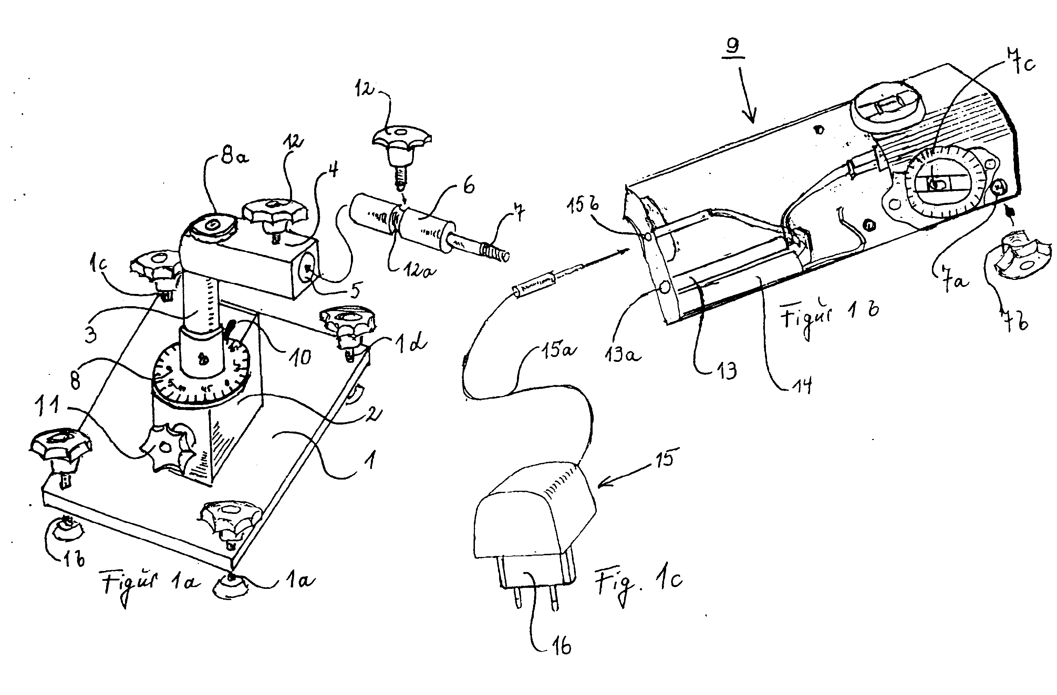

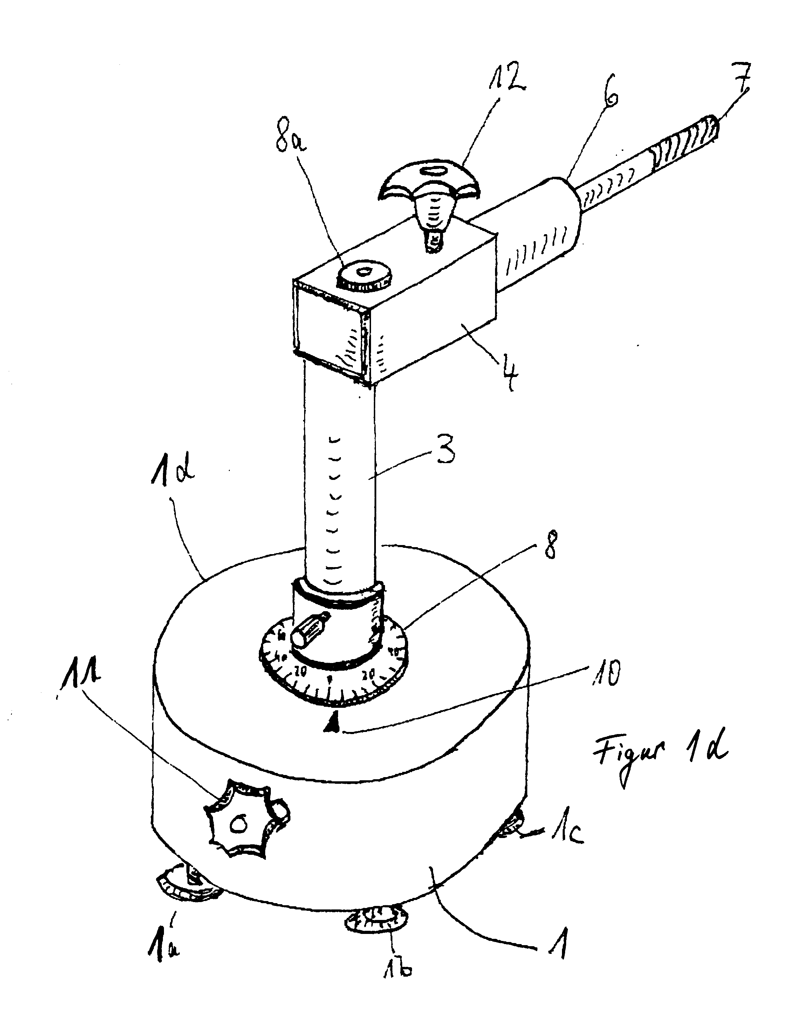

Es ist Aufgabe vorliegender Erfindung, diesen Nachteil des Standes der Technik unter Erreichung von Vorteilen zu überwinden. Demzufolge schafft die vorliegende Erfindung einen Bausatz aus Laserwasserwaage und Justiergerät, dessen Wesen in der beiliegenden Figur 1a erläutert ist.

Figur 1a zeigt eine beispielhafte Ausführungsform.

Mit dem Bezugszeichen 1 ist die Sockelplatte des Justiergerätes bezeichnet, die beispielsweise quadratisch, rechteckig oder auch rund insbesondere kreisförmig ausgebildet sein kann. Auf dieser Sockelplatte ist der Justiersockel 2 angeordnet, der eine Drehsäule 3 trägt, die im Justiersockel 2 zwangsgeführt ist. Parallel zur Oberfläche der Sokkelplatte 1 ist am oberen Ende der brehsäule 3 ein Dreharm 4 angeordnet, in dessen Längsbohrung 5 eine Justierachse 6 eingeführt ist, an deren freiem Ende ein Bolzen 7 sich befindet. Durch Einstecken dieses Bolzens in die entsprechende Bohrung 7a am seitlichen Ende der Laserwasserwaage wird die Verbindung der beiden Bauteilelemente hergestellt.Um eine feste Verbindung beider Bauteile zu erreichen, werden diese vorzugsweise mittels einer Feststellschraube 7b verklemmt. Siehe hierzu auch Figur 1b, die die Laserwasserwaage darstellt.

Nach einer bevorzugten Ausführungsform ist die Sockelplatte 1 mit Justierfüßen 1a, 1b, 1c und 1d ausgestattet, die dazu dienen, sicherzustellen, daß die Sockelplatte und damit das gesamte Justiergerät horizontal auf seiner Unterlage oder seinem Untergrund ruht. Die Erfüllung dieser Bedingung ist durch die Überwachung einer sogenannten Libelle 8 sichergestellt.

Durch Drehen und damit Heben oder Senken der Justierfüße, die an ihren oberen Enden Drehorgane in Form von beispielsweise geriffelten Plättchen aufweisen, kann die Horizontallage des Justiergerätes leicht erreicht werden.

Der Justiersockel 2 weist an seiner Oberfläche einen Skalenring 8 mit 360°-Einteilung auf, der die jeweilige Grad-Position der Drehsäule 3 und damit des Dreharms 4 und schließlich der Justierachse 6 mit eingeschraubter Laserwasserwaage 9 anzeigt. Damit ist die Seitenverschwenkung fixierbar, die mittels Feststellschraube 11 erfolgt; mit 10 ist der Zeiger bezeichnet. Nach einer bevorzugten Ausführungsform ist der Zeiger 10 fest mit der Drehachse 3 verbunden und dreht sich mit dieser, wobei der Skalenring 8 mit dem Justiersockel 2 fest verbunden ist. Die Laserwasserwaage 9 selbst ist in der Figur 1b im einzelnen dargestellt.

Die Fixierung der Seitenverschwenkung auf einen bestimmten und gewünschten Gradzwischen 0 und 360° geschieht durch Verdrehung der Drehsäule 3, die in der entsprechenden Bohrung des Justiersockels 2 drehbar gelagert ist, wobei mit dieser Drehung sich der Zeiger 10 mitdreht und der Betrag der Drehung an dem auf dem Justiersockel 2 fest angeordneten Skalenring 8 mit 360°-Einteilung leicht lesbar ist.

Ist die gewünschte Drehung der Drehsäule 3 und damit des Dreharms 4 erfolgt, wird durch Anziehen der im Justiersockel befindlichen Schraube 11 mittels Schraubkopf eine Arretierung und damit die gewünschte Seitenfixierung sichergestellt.

In der Längsbohrung 5 des Dreharms 4, der mit der Drehsäule einstückig verbunden ist, findet die Justierachse 6 Platz, deren fester Sitz in der Längsbohrung 5 durch eine Feststellschraube 12 sichergestellt wird, die vorzugsweise in einer Rillung 12a der Justierachse 6 ruht.

Zur an der Libelle meßbaren jeweils gewünschten Höhenverschwenkung und Höhenjustierung wird der Bolzen 7 der Justierachse 6, in die Bohrung 7a der Laserwasserwaage eingesteckt und die Laserwasserwaage in die gewünschte Höhenlage gebracht.

In Figur 1b ist eine Laserwasserwaage dargestellt und zwar in Gestalt einer Laser-Winkelwasserwaage.

Die Winkelwasserwaage ist beispielsweise für den Gerüstbau, den Heizungsbau, den Sanitärbereich, den Türen- und Fensterbau und generell für den Innenausbau deshalb von besonderer Bedeutung, weil das Winkelprofil dieser Wasserwaage in kürzester Zeit an zwei Seiten des zu vermessenden Bauelements sozusagen gleichzeitig angelegt werden kann und damit einen stabilen und sicheren Halt bietet. Die beiden Seiten des zu vermessenden Elements werden von einem Winkel eingeschlossen, der bei Ingebrauchnahme der Winkelwasserwaage vom Innenwinkel der Wasserwaage umschlossen wird.

Bei der Ausführungsform der Figur 1b ist mit Bezugszeichen 13 die Laseranordnung mit Mündung 13a für den Laserstrahl und mit dem Bezugszeichen 14 der elektrische Akkumulator zur Speisung der Laseranordnung gekennzeichnet.

An Stelle der in Figur 1b dargestellten Laser-Winkelwasserwaage kann gemäß vorliegender Erfindung als Bausatzelement jede andere Laserwasserwaage eingesetzt werden.

Nach einer besonderen Ausführungsform vorliegender Erfindung ist der Bausatz gemäß vorliegender Erfindung ferner mit einem Aufladegerät 15 für den elektrischen Akkumulator 14 kombiniert. Das Aufladegerät ist an sich herkömmlicher Bauart und weist eine Verbindungsleitung 15a zum elektrischen Akkumulator der Laserwasserwaage, die eine entsprechende Steckvorrichtung 15b aufweist, auf. Mit dem Bezugszeichen 16 ist der Netzstecker des Aufladegerätes bezeichnet.

Das Aufladegerät ist in der Figur 1c dargestellt.

Der erfindungsgemäße Bausatz kann aus beliebigen Materialien, insbesondere einer Leichtmetall-Legierung und/oder aus Kunststoff bestehen.

Die weiterhin beiliegende Figur 1d zeigt eine weitere besonders bevorzugte Ausführungsform des Justiergerätes, die sich dadurch auszeichnet, daß die Sockelplatte 1 kreisförmig ausgebildet ist, daß der Justiersockel entfällt, daß die Drehsäule 3 direkt in der Sockelplatte 1 angeordnet ist, daß der Skalenring 8, der fest mit der Drehsäule 3 verbindbar ist, mit einem Zeiger 10 zusammenarbeitet, der fest an der Oberfläche der Sokkelplatte 1 angeordnet ist.

Die übrige Anordnung ist die gleiche wie in Figur 1a beschrieben.

## Patentansprüche

1. Bausatz, bestehend aus einer Laserwasserwaage und einem mit dieser integrierbaren Justiergerät zur Justierung und Fixierung der Wasserwaage in allen Richtungen des Raums.

2. Bausatz nach Anspruch 1,
dadurch gekennzeichnet,
daß er ein Aufladegerät für den elektrischen Akkumulator der Laseranordnung aufweist.

3. Bausatz nach Anspruch 1 oder 2,
dadurch gekennzeichnet,
daß das Justiergerät aus einer Sockelplatte (1) mit Justierfüßen (1a - 1b), einem Justiersockel (2), einer Drehsäule (3), einem mit dieser einstückig verbundenen Dreharm (4), der eine Längsbohrung (5) aufweist, einer Justierachse (6) mit Bolzen (7), einem Skalenring (8) mit 360° Einteilung, einem Zeiger (10), ferner aus einer Laserwasserwaage (9) besteht, wobei an einer Seitenwand der Waserwaage eine Bohrung (7a) für den Bolzen (7) der Justierachse (6) angeordnet ist.

4. Bausatz nach Ansprüchen 2 - 3,
dadurch gekennzeichnet,
daß er mit einem Aufladegerät für den elektrischen Akkumulator der Laseranordnung der Laserwasserwaage kombiniert ist.

5. Bausatz nach mindestens einem der vorangegangenen Ansprüche 1 - 4,
dadurch gekennzeichnet,
daß die Laserwasserwaage eine Winkelwasserwaage ist.

6. Bausatz nach mindestens einem der vorangegangenen Ansprüche 1 - 5,
dadurch gekennzeichnet,
daß der Justiersockel (2) eine Feststellschraube (11) für die Drehsäule (3) sowie einen Skalenring (8) mit 360°- Einteilung nebst einem feststehenden Zeiger (10) aufweist.

7. Bausatz nach mindestens einem der vorangegangenen Ansprüche 1 - 6,
dadurch gekennzeichnet,
daß der Dreharm (4) eine Libelle (8a) aufweist.

8. Bausatz nach mindestens einem der vorangegangenen Ansprüche 1 - 7,
dadurch gekennzeichnet,
daß im Dreharm (4) eine Feststellschraube (12) und in der Justierachse (6) eine Führungsrille (12a) für die Feststellschraube (12) angeordnet ist.

9. Bausatz nach mindestens einem der vorangegangenen Ansprüche 1 - 8,
dadurch gekennzeichnet,
daß die Sockelplatte (1) kreisförmig ausgebildet ist, daß der Justiersockel entfällt, daß die Drehsäule (3) direkt in der Sockelplatte (1) angeordnet ist, daß der Skalenring (8), der fest mit der Drehsäule (3) verbindbar angeordnet ist, mit dem Zeiger (10) zusammenarbeitet, der seinerseits fest an der Oberfläche der Sockelplatte (1) angeordnet ist.
